# EUROPÄISCHE PATENTSCHRIFT

(11) **EP 1 116 339 B1**
(45) Veröffentlichungstag und Bekanntmachung des Hinweises auf die Patenterteilung: **12.07.2006**
(21) Anmeldenummer: 99907241.6
(22) Anmeldetag: 15.01.1999
(51) Int. Cl.: H04B 1/707

(54) **VERFAHREN ZUM EMPFANGEN ODER SENDEN VON NACHRICHTEN**
METHOD FOR RECEIVING OR SENDING MESSAGES
PROCEDE POUR RECEVOIR ET ENVOYER DES MESSAGES

(30) Priorität: 22.09.1998 DE 19843434
(43) Veröffentlichungstag der Anmeldung: 18.07.2001
(60) Teilanmeldung: 05010362.1
(73) Patentinhaber: SIEMENS AKTIENGESELLSCHAFT, 80333 München (DE)
(72) Erfinder: MICHEL, Jürgen, D-80634 München (DE); RAAF, Bernhard, D-81475 München (DE)
(86) Internationale Anmeldenummer: PCT/DE1999/000078
(87) Internationale Veröffentlichungsnummer: WO 2000/018028

(56) Entgegenhaltungen:
- EP-A- 0 654 913
- EP-A- 0 795 971
- EP-A- 0 825 737
- EP-A- 0 838 910
- US-A- 5 673 260
- US-A- 5 742 636
- GLISIC S G ET AL: "A NEW APPROACH TO LONG CODE ACQUISITION IN SPREAD SPECTRUM RADIO" MILITARY COMMUNICATIONS IN A CHANGING WORLD, MCLEAN, VA., NOV. 4 - 7, 1991, Bd. 3, 1. Januar 1991 (1991-01-01), Seiten 1281-1285, XP000273900 INSTITUTE OF ELECTRICAL AND ELECTRONICS ENGINEERS
- HIGUCHI K ET AL: "FAST CELL SEARCH ALGORITHM IN DS-CDMA MOBILE RADIO USING LONG SPREADING CODES" 1997 IEEE 47TH. VEHICULAR TECHNOLOGY CONFERENCE, PHOENIX, MAY 4 - 7, 1997, Bd. 3, Nr. CONF. 47, 4. Mai 1997 (1997-05-04), Seiten 1430-1434, XP000738598 INSTITUTE OF ELECTRICAL AND ELECTRONICS ENGINEERS ISBN: 0-7803-3660-7

## Beschreibung

Bei der digitalen Übertragung von Nachrichten zwischen einem Sender und einem Empfänger werden häufig sogenannte Spreizfolgen (spreading codes, Spreizcodes) verwendet. Wird ein Sendesignal mit einer solchen Spreizfolge umgetastet, wird die spektrale Breite des Sendesignals erhöht. Im allgemeinen werden Spreizfolgen mit Zeittakten verwendet, deren Zeitkonstanten (Chips, TC) erheblich kleiner sind als die Pulsbreiten (T) des digitalen Nachrichtensignals. Ein Puls oder ein Symbol des digitalen Nachrichtensignals wird dann auf eine Vielzahl N von Chips der Spreizfolge aufgeteilt, wodurch die Bandbreite des Nachrichtensignals entsprechend vervielfacht wird.

Wichtige Beispiele solcher Übertragungsverfahren mit spektraler Spreizung (spread spectrum) sind die sogenannten Code Division Multiple Access (CDMA) Verfahren, die z.B. im Bereich der Mobiltelefonie oder der drahtlosen Datenübertragung eine immer bedeutendere Rolle spielen. Bei diesen Verfahren wird im Empfänger das gespreizte Signal mit einer passenden Spreizfolge korreliert. Da unterschiedliche, nicht äquivalente Spreizfolgen miteinander praktisch eine verschwindend geringe Korrelation aufweisen, ermöglicht dieses Verfahren die Detektion genau eines Nutzsignales aus einer Vielzahl von in dem gespreizten Signal enthaltenen Nutzsignalen, wobei alle anderen Nutzsignale, die im Sender mit anderen Spreizfolgen umgetastet wurden, im Empfänger wirksam unterdrückt werden. Als notwendige Voraussetzung hierfür wird allgemein angesehen, daß der Empfänger dieselbe Spreizfolge zur Korrelation verwendet, die auch zur Umtastung (Spreizung) des für ihn bestimmten Nutzsignales verwendet wurde.

Vorrichtungen zur Durchführung solcher Verfahren sind im allgemeinen recht aufwendig konstruiert. Weil eine große und ständig steigende Zahl von Nutzkanälen benötigt wird, werden die verwendeten Spreizfolgen recht lang und die entsprechenden Taktzeiten immer kürzer. Dies erfordert z.B. Korrelatoren entsprechender Komplexität und mit entsprechend hoher Taktrate.

Es ist eine Aufgabe der vorliegenden Erfindung, eine technische Lehre anzugeben, mit der der Aufwand für die Korrelation und allgemein für den Empfang gespreizter Signale verringert werden kann. Diese Aufgabe wird durch ein Verfahren gemäß einem der Patentansprüche gelöst.

Bei diesen Verfahren wird zum Empfang der übertragenen Nachrichten eine zweite Spreizfolge verwendet, die kürzer ist als die zur Umtastung des Nachrichtensignals im Sender verwendete erste Spreizfolge. Umfaßt die erste Spreizfolge N Chips, kommt die zweite Spreizfolge mit M Chips aus, wobei M kleiner als N ist. Der Vorgang der Korrelation des gespreizten Signals mit der zweiten Spreizfolge im Empfänger wird hierdurch vereinfacht. Beim Senden von Nachrichten sieht die Erfindung die Verwendung geeigneter Spreizfolgen vor, mit denen die Orthogonalität der Sreizfolges verschiedener Kanäle gewahrt werden kann.

Es sind zwar, z.B. aus der US-Patentschrift 5,673,260 (Method and System for CDMA Mobile Communication) vom 30. Sept. 1997, Systeme bekannt, bei denen zur Synchronisation des Empfängers mit dem Sender im Empfänger eine kürzere Spreizfolge als im Sender verwendet wird. Bei der Synchronisation werden jedoch sehr lange Synchronisationsdatensequenzen verwendet, die dem Empfänger exakt bekannt sind. Das Problem besteht hier also nicht in der Detektion der Daten (Nachrichten) sondern in der Ermittlung der passenden Zeitverzögerung zwischen Sender und Empfänger mit Hilfe bekannter Synchronisationsdaten. Die vorliegende Erfindung hingegen dient der Detektion von dem Empfänger unbekannten Daten. Werden hierbei verkürzte oder kürzere Spreizfolgen im Empfänger verwendet, unterscheidet sich diese Vorgehensweise und die dabei zu lösenden Probleme grundlegend von der Synchronisation mit verkürzten Spreizfolgen.

Vorteilhafte Weiterbildungen der Erfindung sind Gegenstand von nachgeordneten Patentansprüchen.

Eine bevorzugte Ausführungsform der Erfindung sieht eine adaptive Anpassung der Spreizfolgenlänge an die jeweils herrschenden Empfangsverhältnisse vor. Dabei kann die Empfangsqualität mit Hilfe redundanter Codes bestimmt und gegebenenfalls verbessert werden. Die Verwendung geeigneter Spreizfolgen gemäß entsprechenden Ausführungsformen der Erfindung erlaubt Energieeinsparungen durch intermittierende Abschaltung oder langsamere Taktung bestimmter Hardwareeinheiten. Auf der Sendeseite können die Spreizfolgen gemäß entsprechenden Weiterbildungen der Erfindung so gewählt werden, daß eine (praktisch ausreichende) Orthogonalität der kurzen Spreizfolgen gewährleistet ist.

Im folgenden wird die Erfindung anhand bevorzugter Ausführungsbeispiele und mit Hilfe der Figuren näher erläutert.

Figur 1 zeigt in schematischer Darstellung eine bevorzugte Wahl kurzer Spreizfolgen, die einen besonders energiesparenden Betrieb des Empfangsgerätes ermöglicht.

Figur 2 zeigt in schematischer Darstellung eine bevorzugte Auswahl von Spreizfolgen, mit der die Orthogonalität der Spreizfolgen verschiedener Kanäle sichergestellt werden kann.

Bei einem nach dem Prinzip der Bandspreiztechnik (spread spectrum) ausgeführten Übertragungssystem werden die Datensymbole über den Übertragungskanal wie im Folgenden erläutert übertragen. Das Sendesignal, z.B. aus Rechteckimpulsen der Dauer T bestehend, wird durch eine schnelle erste Spreizfolge der Länge T=N*TC umgetastet. Dabei ist TC die Chipdauer der Spreizfolge (spreading code). Sie ist viel kleiner als T, so daß das Signal breitbandig wird. Idealerweise entsteht ein weißes breitbandiges Signal, das über den Mehrwegekanal mit Signallaufzeiten {tk} übertragen und im Empfänger detektiert wird.

Für den Zugriff mehrerer Nutzer werden zueinander orthogonale Sreizfolgen verwendet. Für jeden Nutzkanal wird eine eigene Spreizfolge verwendet, der zu den anderen Spreizfolgen orthogonal ist, d.h. dessen Korrelation mit den anderen Spreizfolgen (wenigstens praktisch) verschwindet. Daher können alle Nutzkanäle gleichzeitig über ein einziges breites Frequenzband übertragen werden und zum Empfänger gelangen.

Im Empfänger wird das Empfangssignal zur Detektion des Sendesignals mit der gleichen, allerdings um tK ∈{tk} verzögerten Spreizfolge korreliert. Diese Operation bezeichnet man auch als Entspreizung. Die einzelnen Teilnehmer werden mit Kenntnis der spezifischen orthogonalen Spreizfolge selektiert. Außerdem werden die Pfade mit den Laufzeiten tk ≠ tK unterdrückt, da eine zeitverschobene Spreizfolge im allgemeinen weder mit anderen Spreizfolgen noch mit sich selbst (nennenswert) korreliert. Anders interpretiert stellt der Empfänger ein an den jeweiligen Nutzkanal und an den Sender signalangepaßtes Filter dar. Durch die Korrelation gelingt die eindeutige Identifizierung des Senders auch im Falle eines geringen Signal-/Rauschverhältnisses.

Die Detektion erfolgt sobald ein Datenbit empfangen worden ist. Sie kann von leistungsfähigen Verfahren wie Deinterleaving oder einer Kanaldekodierung mittels Viterbi Algorithmus unterstützt werden. Dabei wird die Redundanz eines zur Kanalcodierung verwendeten Codes, der möglicherweise auch eine Fehlerkorrektur erlaubt, auf dem Wege einer schrittweisen statitischen Schätzung der Datenbits, z.B. mit einem maximum aposteriori probability (MAP) Schätzverfahren, zur Schätzung und bzw. oder Verbesserung der Empfangsqualität verwendet.

Derartige Verfahren sind dem Fachmann grundsätzlich bekannt. Ihr Einsatz im Zusammenhang mit der vorliegenden Erfindung bereitet dem Fachmann nach der Lektüre der vorliegenden Beschreibung der Erfindung keine Schwierigkeiten.

Sind diese Verfahren genügend leistungsfähig oder ist der Signal-/Rauschabstand genügend groß, so läßt sich die Nutzinformation auch dann rekonstruieren (detektieren), wenn man die Korrelation nicht mit der jeweils passenden, nutzerspezifischen ersten Spreizfolge der Länge N*TC durchführt, die auch im Sender verwendet wurde. Dies ist die grundlegende Idee, auf der die vorliegende Erfindung basiert. Man kann nämlich statt dessen auch eine verkürzte oder kürzere zweite Spreizfolge der Länge M*TC mit M<N einsetzen und anstatt N Chips nun lediglich M Chips in die Signalverarbeitung mit einbeziehen.

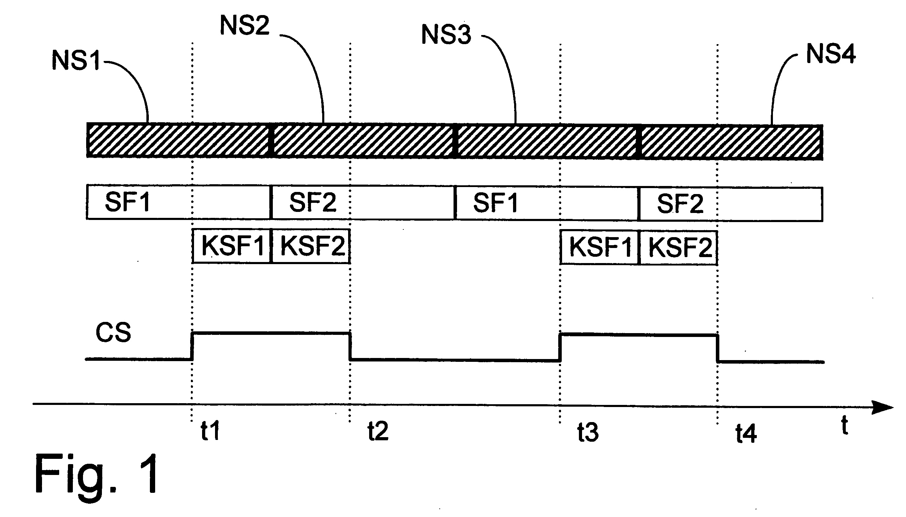

Hierdurch ist eine entsprechende Einsparung von Hardwareressourcen und Energie möglich. Denn man kann bei geeigneter Wahl einer verkürzten oder kürzeren Spreizfolge, die z.B. eine - äquidistant oder nicht äquidistant - unterabgetastete Teilfolge der im Sender verwendeten Spreizfolge sein kann, Systeme mit entsprechend geringeren Taktraten oder weniger leistungsfähige und stromsparendere Prozessoren einsetzen. Verwendet man andererseits verkürzte Spreizfolgen, die zusammenhängende Teilstücke der im Sender verwendeten Spreizfolgen sind, kann man Hardwareeinheiten intermittierend abschalten und so Energie sparen. Dies geht besonders vorteilhaft, wenn man verkürzte Spreizfolgen für zwei aufeinanderfolgende Symbole einer zu detektierenden Nachricht so wählt, daß eine Abschaltung einzelner Einrichtungen einer Empfangseinheit über möglichst lange zusammenhängende Zeiträume möglich ist. Dies läßt sich - wie in Figur 1 gezeigt - am einfachsten realisieren, wenn man ein Paar von verkürzten Spreizfolgen verwendet, dessen zeitlich erste Spreizfolge (KSF1) mit dem Ende der entsprechenden unverkürzten Spreizfolge (SF1) übereinstimmt und dessen zeitlich zweite Spreizfolge (KSF2) mit dem Anfang der entsprechenden unverkürzten Spreizfolge (SF2) übereinstimmt.

Neben verkürzten Spreizfolgen im eigentlich Wortsinn, die echte Teilfolgen, z.B. (a1, a4, a6, a7, a10, a11, a34, ...), einer unverkürzten Spreizfolge, z.B. (a1, a2, a3, a4, a5, a6, a7, ...), sind, können auch andere kurze Spreizfolgen verwendet werden, die als Teilfolgen, z.B. (b1, b3, b5, b7, b9, ...), einer anderen unverkürzten Spreizfolge, z.B. (bl, b2, b3, b4, b5, b6, ...), aufgefaßt werden können, die allerdings eine genügend große Kreuzkorrelation, im wesentlich proportional zu (a1+b1, a2+b2, a3+b3, a4+b4, ...), miteinander aufweisen müssen, damit der gewünschte Nachrichtenkanal mit ausreichendem Signal-/Rauschverhältnis detektiert werden kann und andere Nachrichtenkanäle hinreichend unterdrückt werden können. Wenn im Rahmen der Beschreibung dieser Erfindung von einer verkürzten Spreizfolge die Rede ist, um die Diktion nicht zu unübersichtlich werden zu lassen, sollen daher immer auch solche allgemeineren, besser als kürzere oder kurze Spreizfolgen zu bezeichnende Spreizfolgen gemeint sein, wenn nicht ausdrücklich das Gegenteil gesagt wird. Ebenso müssen Spreizfolgen im allgemeinen natürlich nicht mit anderen Spreizfolgen im strikten Sinne des Wortes übereinstimmen, um eine sachdienliche Korrelation zu ermöglichen; es genügt vielmehr in den meisten Fällen eine ausreichend hohe Kreuzkorrelation. Auch dies gilt es beim Lesen dieser Beschreibung stets zu berücksichtigen, wenn aus Gründen der leichteren Lesbarkeit in dieser Beschreibung stellenweise einfach nur von einer (u.U. auch nur teilweisen) Übereinstimmung zweier Spreizfolgen die Rede ist.

Nach dem Empfang eines mit Hilfe der Bandspreiztechnik übertragenen Bits oder Symbols der Länge N*TC wird die Entspreizung gestartet. Bei ausreichendem Signal-/Rauschverhältnis läßt sich daraus durch Korrelation mit der verkürzten spezifischen Spreizfolge der Länge M*TC im allgemeinen das gesendete Symbol sowie die gesendeten Nutzdaten komplett rekonstruieren. Dies wird durch Ausnutzung der bei der Kanalcodierung implementierten Redundanz erleichtert. Daraus resultiert eine Einsparung, weil nicht alle gesendeten Chips empfangen und verarbeitet werden müssen.

Sollte die Rekonstruktion der Nutzdaten wider Erwarten, z.B. wegen einer zu schlechten Empfangsqualität, nicht möglich sein, müssen die Daten durch erneute Korrelation mit einer gegebenenfals längeren Spreizfolge präzisiert werden. Dazu sind weitere Chips mit in die Korrelation einzubeziehen. Ergebnisse vorheriger Durchläufe können ausgenutzt werden. Als Entscheidungsgrundlage für den Zustand des jeweils gesendeten Bits kann die Bewertung des Signal-/Rauschabstandes oder der Ergebnisse der statistischen Schätzung bei der Kanaldecodierung sein. Mit Kenntnis der Übertragungsqualität kann auch eine Abschätzung für die Mindestlänge der verkürzten Spreizfolge abhängig von der geforderten Zuverlässigkeit getroffen werden.

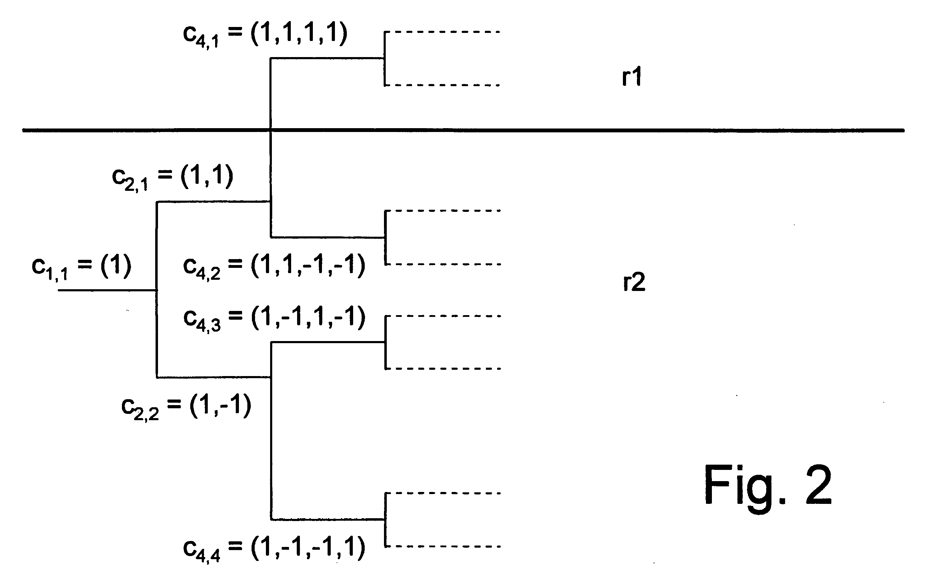

Durch die Verwendung kürzerer Spreizfolgen verringert sich die Anzahl zueinander orthogonaler Spreizfolgen. Deshalb ist es vorteilhaft, den Modus und die Reihenfolge der Zuweisung der Spreizfolgen an die Nutzer bzw. an die logischen Kanäle sinnvoll vorzugeben bzw. bestimmte Spreizfolgen innerhalb einer Funkzelle nicht zu nutzen. Beispielsweise könnte - wie in Figur 2 dargestellt - vorgesehen werden, daß diejenige Spreizfolge, deren erste Hälfte mit der Spreizfolge des Paging-Kanals übereinstimmt, im System nicht oder erst als letzte verwendet wird.

Dieses Prinzip ist insbesondere für den sogenannten Paging Modus und den sogenannten Broadcast-Kanal (BCCH) anwendbar. Dort wird ein Signal an mehrere Mobilstationen, die sich in einer Funkzelle befinden, gesendet. Um sicherzustellen, daß dieses Signal von allen Mobilstationen empfangen werden kann, muß es mit verhältnismäßig hoher Leistung gesendet werden. Die meisten Mobilstationen befinden sich in einer günstigen Position, in der die Empfangsqualität genügend gut ist, und können das hier beschriebene Verfahren der Korrelation mit kürzeren Spreizfolgen anwenden, ohne die Nachricht zu verpassen. Die damit verbunden Stromeinsparung ist im Paging Modus besonders wichtig, da sie direkt und besonders spürbar zur Verlängerung der Stand-by-Zeit beiträgt. -

Zur intermittierenden Abschaltung eignen sich besonders Analog-/Digitalwandler und Korrelatoren. Diese Verfahrensvariante ist besonders vorteilhaft im Zusammenhang mit der in Figur 1 gezeigten Wahl von Spreizfolgen. Für die Variante der Taktung mit geringerer Takfrequenz sind unterabgetastete Teilfolgen besonders geeignet. Dem Fachmann ist anhand dieser Beschreibung klar, daß beide Maßnahmen auch kombiniert zum Einsatz kommen können.

Wie in Figur 1 schematisch dargestellt, werden zur Umtastung (Spreizung) der zeitlich aufeinander folgenden Nachrichtensymbole (Daten, Bits, Codewörter, oder ähnliches) NS1, NS2, NS3, NS4, im Sender die ersten Spreizfolgen SF1 und SF2 verwendet. Benutzt man im Empfänger nun die kurzen oder verkürzten Spreizfolgen KSF1 und KSF2, die zeitlich so plaziert sind, daß das Steuersignal CS für die Steuerung der ein- und auszuschaltenden Hardware-Einrichtungen nur zu den Zeiten t1 und t3 eingeschaltet und zu den Zeiten t2 und t4 ausgeschaltet werden muß. Bei einer zeitlich nicht zusammenhängenden Plazierung der kurzen Spreizfolgen KSF1 und KSF2 müßte das Steuersignal schneller umgetastet werden, wodurch ein größerer Energieverbrauch verursacht würde.

Figur 2 veranschaulicht die Zusammenhänge bei der Auswahl geeigneter Spreizfolgen. Diese lassen sich in einem sogenannten Code-Baum systematisch darstellen, der mit zunehmender Länge der Spreizfolgen eine exponentiell wachsende Zahl von orthogonalen Spreizfolgen zur Verfügung stellt. Da andere Arten oder Systematiken von Spreizfolgen, die letztlich im wesentlichen äquivalent sind, dem Fachmann bekannt sind, wird hier nur diese Art von Spreizfolgen behandelt. Die Erfindung kann aber mit anderen Arten von Spreizcodes ebenso gut ausgeführt werden. Um zu verhindern, daß durch eine Verwendung kürzerer oder verkürzter Spreizfolgen ein Verlust der Orthogonalität eintritt, ist es sinnvoll, die Spreizfolgen im Bereich r1 für den Paging-Kanal zu reserviern und nur die Spreizfolgen aus dem Bereich r2 für die Spreizung von individuellen Nutzerkanälen zu verwenden.

## Patentansprüche

1. Verfahren zum Empfang von Nachrichten, bei dem ein mit Hilfe einer ersten Spreizfolge spektral gespreiztes Signal zur Detektion der Nachrichten mit einer zweiten Spreizfolge korreliert wird, welche kürzer ist als die erste Spreizfolge und bei dem verkürzte Spreizfolgen für zwei aufeinanderfolgende Symbole einer zu detektierenden Nachricht so gewählt werden, daß eine Abschaltung einzelner Einrichtungen einer Empfangseinheit über möglichst lange zusammenhängende Zeiträume möglich ist, **gekennzeichnet dadurch, daß** ein Paar von verkürzten Spreizfolgen verwendet wird, dessen zeitlich erste Spreizfolge (KSF1) mit dem Ende der entsprechenden unverkürzten ersten Spreizfolge (SF1) übereinstimmt und dessen zeitlich zweite Spreizfolge (KSF2) mit dem Anfang der entsprechenden unverkürzten zweiten Spreizfolge (SF2) übereinstimmt.

2. Verfahren nach Anspruch 1, bei dem die verkürzte zweite Spreizfolge eine Teilfolge der ersten Spreizfolge ist.

3. Verfahren nach einem der vorhergehenden Ansprüche, bei dem die zweite Spreizfolge möglichst kurz aber gerade so lang gewählt wird, daß ein Empfang von Nachrichten mit ausreichender Qualität oder Sicherheit möglich ist.

4. Verfahren nach Anspruch 3, bei dem die Qualität der empfangenen Nachrichten laufend bewertet wird, und bei dem die Länge der verwendeten zweiten Spreizfolge laufend der momentanen Empfangsqualität so angepaßt wird, daß eine ausreichende Empfangsqualität erreicht wird.

5. Verfahren nach einem der Ansprüche 3 oder 4, bei dem die Empfangsqualität mit Hilfe redundanter Codes bestimmt wird, welche zur Kanalcodierung der Nachrichten verwendet wurden.

6. Verfahren nach einem der Ansprüche 3, 4, oder 5, bei dem die Empfangsqualität mit Hilfe von Fehlerkorrektur-Codes verbessert wird, welche zur Kanalcodierung der Nachrichten verwendet wurden.

7. Verfahren nach einem der vorhergehenden Ansprüche, bei dem einzelne Einrichtungen einer Empfangseinheit, wie z.B. Analog/Digital-Wandler oder Korrelatoren intermittierend abgeschaltet oder mit einer geringeren Taktfrequenz betrieben werden, weil zur Korrelation eine zweite Spreizfolge verwendet wird, die kürzer ist als die erste Spreizfolge.

8. Verfahren nach Anspruch 7, bei dem die intermittierende Abschaltung einzelner Einrichtungen einer Empfangseinheit durch eine hierfür vorgesehene Steuereinrichtung so gesteuert wird, daß der Stromverbrauch der Empfangseinheit bei vorgegebener Empfangsqualität so gering wie möglich ist.

9. Verfahren nach einem der vorhergehenden Ansprüche, bei dem die zweite oder eine vorherige Spreizfolge zu einer dritten oder weiteren Spreizfolge, die ebenfalls kürzer als die erste Spreizfolge ist, verlängert wird, falls die Empfangsqualität bei Verwendung der zweiten oder vorherigen Spreizfolge nicht ausreichend ist.

## Claims

1. Method for receiving messages in which a spread-spectrum signal using a first spreading code is correlated, for the purpose of detecting the messages, with a second spreading code which is shorter than the first spreading code and in which shortened spreading codes are selected for two successive symbols of a message to be detected, in such a manner that individual facilities of a receiving unit can be turned off over coherent periods of time which are as long as possible, **characterized in that** a pair of shortened spreading codes is used, the temporally first spreading code (KSF1) of which corresponds to the end of the corresponding unshortened first spreading code (SF1) and the temporally second spreading code (KSF2) of which corresponds to the start of the corresponding unshortened second spreading code (SF2).

2. Method according to Claim 1, in which the shortened second spreading code is a code segment of the first spreading code.

3. Method according to one of the preceding claims, in which the second spreading code is selected to be as short as possible but just long enough to enable messages to be received with sufficient quality or reliability.

4. Method according to Claim 3, in which the quality of the received messages is continuously assessed and in which the length of the second spreading code used is continuously adapted to the instantaneous quality of reception in such a manner that an adequate quality of reception is achieved.

5. Method according to one of Claims 3 or 4, in which the quality of reception is determined with the aid of redundant codes which were used for the channel coding of the messages.

6. Method according to one of Claims 3, 4 or 5, in which the quality of reception is improved with the aid of error correction codes which were used for the channel coding of the messages.

7. Method according to one of the preceding claims, in which individual facilities of a receiving unit such as, for example, analogue/digital converters or correlators are intermittently turned off or are operated at a lower clock frequency because a second spreading code which is shorter than the first spreading code is used for the correlation.

8. Method according to Claim 7, in which the intermittent turn-off of individual facilities of a receiving unit is controlled by a control device provided for this purpose, in such a manner that the power consumption of the receiving unit is as low as possible with a predetermined quality of reception.

9. Method according to one of the preceding claims, in which the second or a previous spreading code is extended to form a third or further spreading code which is also shorter than the first spreading code if the quality of reception is not adequate when the second or previous spreading code is used.

## Revendications

1. Procédé pour recevoir des messages, dans lequel un signal étalé de manière spectrale à l'aide d'une première séquence d'étalement est corrélé pour la détection des messages au moyen d'une deuxième séquence d'étalement, laquelle est plus courte que la première séquence d'étalement, et dans lequel des séquences d'étalement raccourcies pour deux symboles consécutifs d'un message à détecter sont sélectionnées de telle manière qu'une déconnexion de dispositifs individuels d'une unité de réception est possible par l'intermédiaire de périodes de temps continues les plus longues possibles, **caractérisé en ce qu'**une paire de séquences d'étalement raccourcies est utilisée, dont la première séquence d'étalement temporelle (KSF1) correspond à la fin de la première séquence d'étalement non raccourcie correspondante (SF1) et dont la deuxième séquence d'étalement temporelle (KSF2) correspond au début de la deuxième séquence d'étalement non raccourcie correspondante (SF2).

2. Procédé selon la revendication 1, dans lequel la deuxième séquence d'étalement raccourcie est une séquence partielle de la première séquence d'étalement.

3. Procédé selon l'une quelconque des revendications précédentes, dans lequel la deuxième séquence d'étalement est sélectionnée de manière la plus courte possible mais aussi longtemps qu'une réception de messages avec une qualité suffisante ou une sécurité suffisante est possible.

4. Procédé selon la revendication 3, dans lequel la qualité des messages reçus est évaluée en permanence et dans lequel la longueur de la deuxième séquence d'étalement utilisée est adaptée en continu à la qualité de réception momentanée de telle manière qu'une qualité de réception suffisante est obtenue.

5. Procédé selon l'une des revendications 3 ou 4, dans lequel la qualité de réception est déterminée à l'aide de codes redondants qui ont été utilisés pour le codage canal des messages.

6. Procédé selon l'une quelconque des revendications 3, 4 ou 5, dans lequel la qualité de réception est améliorée à l'aide de codes de correction d'erreurs qui ont été utilisés pour le codage canal des messages.

7. Procédé selon l'une quelconque des revendications précédentes, dans lequel des dispositifs individuels d'une unité de réception, comme p. ex. des convertisseurs analogiques/numériques ou des corrélateurs sont déconnectés par intermittence ou sont opérés avec une fréquence de rythme moindre, parce que, pour la corrélation, une deuxième séquence d'étalement est utilisée, qui est plus courte que la première séquence d'étalement.

8. Procédé selon la revendication 7, dans lequel la déconnexion intermittente de dispositifs individuels d'une unité de réception est commandée au moyen d'un dispositif de commande prévu à cet effet, de telle manière que, pour une qualité de réception prédéfinie, la consommation de courant de l'unité de réception est la plus petite possible.

9. Procédé selon l'une quelconque des revendications précédentes, dans lequel la deuxième séquence d'étalement ou une séquence d'étalement précédente est prolongée en une troisième ou en une autre séquence d'étalement qui est également plus courte que la première séquence d'étalement, au cas où la qualité de réception n'est pas suffisante lors de l'utilisation de la deuxième séquence d'étalement ou de la séquence d'étalement précédente.
